# FASCICULE DE BREVET EUROPEEN

(11) **EP 3 097 282 B1**
(45) Date de publication et mention de la délivrance du brevet: **15.04.2020**
(21) Numéro de dépôt: 15704332.4
(22) Date de dépôt: 13.01.2015
(51) Int. Cl.: F01N 3/28, B01F 5/06

(54) **DISPOSITIF DE POST TRAITEMENT CATALYTIQUE DE VÉHICULE AUTOMOBILE ET DÉFLECTEUR ADAPTÉ**
KATALYTISCHES NACHBEHANDLUNGSVORRICHTUNG FÜR KRAFTFAHRZEUG UND ANGEPASSTE DEFLEKTOR
CATALYTIC AFTERTREATMENT DEVICE FOR MOTOR VEHICLE AND ADAPTED DEFLECTOR

(30) Priorité: 21.01.2014 FR 1450481
(43) Date de publication de la demande: 30.11.2016
(73) Titulaire: Renault S.A.S., 92100 Boulogne-Billancourt (FR)
(72) Inventeur: RAGOT, Patrick, F-95870 Bezons (FR); DE MALET, Etienne, F-78000 Versailles (FR); FRERE, Xavier, F-92360 Meudon La Foret (FR); LE NAOUR, Steven, F-92400 Courbevoie (FR)
(86) Numéro de dépôt international: PCT/FR2015/050067
(87) Numéro de publication internationale: WO 2015/110738

(56) Documents cités:
- EP-A1- 2 937 538
- WO-A1-99/09305
- WO-A1-2011/135161
- FR-A1- 2 864 144
- US-A- 4 601 168
- US-A1- 2007 144 158

## Description

L'invention concerne un dispositif de post-traitement catalytique de véhicule automobile et un déflecteur adapté.

Un dispositif de post traitement catalytique de véhicule automobile, communément appelé pot catalytique, est raccordé à la sortie d'échappement d'un moteur thermique afin de recevoir les gaz d'échappement de celui-ci et de les traiter par oxydation catalytique afin de transformer les polluants en eau, azote et dioxyde de carbone. Un pot catalytique fonctionne sur une large plage de températures étendue pouvant atteindre des valeurs élevées, de l'ordre de 700 à 800°C. Les températures d'utilisation élevées et les vibrations du véhicule sollicitent fortement la structure du pot catalytique et de ses constituants.

De manière générale, un pot catalytique comprend une enveloppe métallique, habituellement désignée par le terme anglais « canning », définissant une chambre interne recevant un bloc catalytique, par exemple sous forme de monolithe, contenant le catalyseur. Ladite chambre est sensiblement tubulaire et peut présenter une base circulaire ou elliptique. Les gaz d'échappement pénètrent dans le pot catalytique par une entrée et sont conduits jusqu'au bloc catalytique par une partie évasée qui forme un cône d'entrée. Ce cône d'entrée est généralement une pièce distincte de l'enveloppe et vient recouvrir partiellement une extrémité de l'enveloppe, à laquelle il est fixé au moyen d'un collier de serrage. Afin d'améliorer la distribution des gaz d'échappement depuis le cône d'entrée vers le bloc catalytique, notamment lorsque la distance entre l'entrée du pot catalytique et le bloc catalytique est courte, on dispose généralement un déflecteur à l'intérieur du cône d'entrée, dans une zone centrale de celui-ci. Ce déflecteur est habituellement tronconique, de dimensions inférieures au cône d'entrée, et fixé à ce dernier par des rayons dont les extrémités sont soudées directement au cône d'entrée. WO 99/09305 A1, FR 2 864 144 A1 et US 2007/144158 A1 divulguent des déflecteurs tronconiques. Les différents éléments du pot catalytique sont généralement en acier inoxydable, résistant aux températures et conditions d'utilisation. Du fait des températures élevées mentionnées plus haut, ces matériaux sont soumis à des dilatations importantes qui peuvent amener des déformations permanentes et des fissures sur le déflecteur fixé par soudure sur le cône d'entrée.

Il existe donc un besoin pour un assemblage d'un déflecteur à l'intérieur d'un cône d'entrée qui résiste mieux dans le temps aux conditions d'utilisation sévères d'un dispositif de post-traitement.

L'invention vise à pallier ces inconvénients en proposant un dispositif de post-traitement de gaz d'échappement de moteur à combustion interne de véhicule automobile comportant une enceinte définissant une chambre tubulaire à l'intérieur de laquelle est disposé un élément déflecteur, caractérisé en ce que :
- au moins un moyen de support sensiblement en forme d'anneau s'étendant parallèlement à la paroi de l'enceinte avec un jeu prédéterminé J1, et supportant l'élément déflecteur sensiblement au centre de la chambre tubulaire par au moins deux bras dont une extrémité est fixée au moyen de support et l'autre extrémité est fixée à l'élément déflecteur,
- deux éléments de maintien positionnés de part et d'autre dudit moyen de support axialement, entre ledit moyen de support et l'enceinte , chaque élément de maintien présentant une forme générale sensiblement annulaire ouverte ondulant radialement de manière à être en contact alternativement avec une surface interne de l'enceinte et une surface d'appui en regard dudit moyen de support, lesdites ondulations radiales étant conformées pour bloquer radialement ledit moyen de support par rapport à ladite enceinte.

Par sensiblement annulaire ou sensiblement en forme d'anneau, on entend ici une forme circulaire ou elliptique. Le moyen de support sensiblement en forme d'anneau peut en outre être continu ou discontinu.

Les ondulations radiales des éléments de maintien correspondent ainsi à des variations du rayon de l'élément de maintien, entre des valeurs minimales et maximales. De telles ondulations peuvent être obtenues par simple mise en forme de l'élément de maintien. L'amplitude de ces ondulations, correspondant à la différence entre un rayon maximal et un rayon minimal, peut ainsi être choisie pour bloquer radialement le moyen de support par rapport à l'enceinte. Par exemple, cette amplitude peut être supérieure à la distance séparant la surface interne de l'enceinte de la surface d'appui en regard du moyen de support, notamment quelque soit la dilatation du moyen de support et de l'enceinte.

L'élément déflecteur est ainsi maintenu à l'intérieur de l'enceinte sans avoir besoin d'être soudé aux surfaces internes de l'enceinte. En éliminant ces soudures, l'invention réduit ainsi les risques de fissuration au niveau de l'élément déflecteur et/ou des soudures.

Avantageusement et de manière non limitative, le moyen de support peut comprendre au moins deux éléments sensiblement en forme de portion d'anneau. L'angle d'un élément sensiblement en forme d'anneau peut notamment être supérieur à 60°. Autrement dit, un élément sensiblement en forme de portion d'anneau peut s'étendre suivant un arc dont l'angle est supérieur à 60°. Ces éléments peuvent notamment être disjoints.

Avantageusement, le moyen de support peut comporter une couronne annulaire ou sensiblement annulaire.

Avantageusement et de manière non limitative, ladite surface interne de l'enceinte comporte deux butées annulaires ou sensiblement annulaires s'étendant radialement et disposées de part et d'autre du moyen de support, axialement, à une distance prédéterminée du moyen de support, les deux éléments de maintien étant positionnés chacun entre le moyen de support et une butée annulaire ou sensiblement annulaire en contact avec ladite butée et le moyen de support afin de bloquer axialement ledit moyen de support par rapport à ladite enceinte. Ledit moyen de support est alors bloqué radialement et axialement par les éléments de maintien, ce qui permet d'améliorer sa fixation par rapport à l'enceinte.

Afin d'assurer un contact axialement entre le moyen de support, les éléments de maintien et les butées annulaires ou sensiblement annulaires de l'enceinte, chaque élément de maintien peut présenter une dimension (section) supérieure à la distance séparant le moyen de support d'une butée annulaire ou sensiblement annulaire, par exemple supérieure de l'ordre de 1 à 5mm, de préférence de l'ordre de 2 à 3mm.

Afin de limiter le nombre de pièces et de simplifier la réalisation de l'enceinte, ces butées annulaires ou sensiblement annulaires peuvent faire partie de l'enceinte. Par exemple, lorsque l'enceinte comprend une enveloppe tubulaire destinée à recevoir un bloc catalytique et un cône d'entrée dont une extrémité recouvre partiellement ladite enveloppe, l'une des butées annulaires ou sensiblement annulaires peut être formée par une surface interne radiale dudit cône d'entrée, l'autre butée annulaire ou sensiblement annulaire étant formée au moins en partie par un bord d'extrémité de ladite enveloppe tubulaire.

Le bord d'extrémité de l'enveloppe tubulaire peut former une butée, cette dernière peut cependant ne pas être suffisamment longue. On peut alors envisager de replier le bord d'extrémité de l'enveloppe tubulaire pour former une butée de plus grande surface. Il peut toutefois s'avérer difficile de réaliser une surface plane par pliage du bord d'extrémité. Dans ce cas, il peut être avantageux de solidariser une paroi annulaire ou sensiblement annulaire à la surface interne d'une extrémité de l'enveloppe, dans le prolongement d'un bord d'extrémité, pour former une butée. Une telle butée rapportée peut être soudée à la surface interne de l'extrémité de l'enveloppe.

Afin de recevoir les deux éléments de maintien, le moyen de support peut présenter latéralement deux logements, par exemple définis par des surfaces radiales et des surfaces axiales.

Ainsi, avantageusement, le moyen de support peut présenter une section transversale en forme de T retourné, chaque bras du T formant une surface d'appui, notamment axiale, d'un élément de maintien. La barre verticale du T peut quant à elle former des surfaces d'appui radiales pour les éléments de maintien.

Les éléments de maintien sont avantageusement des éléments allongés, dont la section est très inférieure à la longueur. Il s'agit avantageusement de fils métalliques, par exemple de section circulaire. La forme ondulée confère à ces éléments de maintien une certaine élasticité, qui peut être améliorée par l'utilisation d'aciers élastiques, dits « à ressort ».

L'invention n'est toutefois pas limitée à des éléments de maintien sous forme de fils, notamment à section circulaire. Il pourrait ainsi s'agir de bandes ondulées ou autre de forme générale annulaire.

Les différents éléments du dispositif de post-traitement sont en acier, de préférence en acier inoxydable.

Avantageusement, le déflecteur destiné à un dispositif de post-traitement catalytique selon l'invention comprend un élément déflecteur central de forme semblable à un tronc de cône et au moins un moyen de support de forme sensiblement annulaire disposé autour dudit élément déflecteur, de diamètre maximal prédéterminé, supporté par au moins deux bras radiaux solidaires de l'élément déflecteur et s'étendant radialement depuis ce dernier, ledit moyen de support présentant latéralement deux surfaces externes suivant la forme dudit moyen de support.

Ces surfaces externes peuvent notamment être des surfaces axiales, définies par rapport à un axe de la forme semblable à un tronc de cône de l'élément déflecteur.

Les dimensions maximales du moyen de support peuvent ainsi être choisies de manière à être inférieures aux dimensions internes de l'enceinte du dispositif de post-traitement catalytique auquel il est destiné, par exemple à un jeu prédéterminé près. Ceci permet un positionnement aisé du moyen de support à l'intérieur de l'enceinte tout en permettant une dilatation dudit moyen de support Ce jeu prédéterminé peut ainsi correspondre aux variations de dimensions attendues du moyen de support du fait de la dilatation dans les gammes de températures d'utilisation. Il peut également s'agir d'un jeu de fabrication. Il est par exemple de l'ordre de 1mm. Ce jeu permet en outre le positionnement d'éléments de maintien entre le moyen de support et l'enceinte du dispositif de post-traitement auquel est destiné le déflecteur.

Avantageusement et de manière non limitative, le moyen de support peut comprendre deux surfaces latérales, notamment axiales, et deux surfaces radiales latérales adjacentes, lesdites surfaces latérales et radiales définissant deux logements latéraux. Ces surfaces peuvent notamment être agencées de manière à ce que le moyen de support présente une section transversale en forme de T retourné.

Le déflecteur peut également comprendre deux éléments de maintien, chaque élément de maintien présentant une forme sensiblement annulaire ouverte ondulant radialement de manière à être en contact ponctuellement avec l'une des surfaces externes du moyen de support, lesdites ondulations radiales présentant une amplitude prédéterminée. Cette amplitude peut être telle que décrit plus haut relativement au dispositif de post-traitement.

L'invention concerne également un véhicule automobile, notamment à moteur thermique, comprenant un dispositif de post-traitement selon l'invention.

L'invention est maintenant décrite en référence aux dessins annexés, non limitatifs, dans lesquels :
- la figure 1 est une représentation partielle en coupe axiale d'un dispositif de post-traitement catalytique selon un mode de réalisation de l'invention,
- la figure 2 est une section transversale du dispositif le long de la ligne BB de la figure 1,
- la figure 3 est un agrandissement du détail C de la figure 1,
- la figure 4 est un agrandissement du détail D de la figure 2.

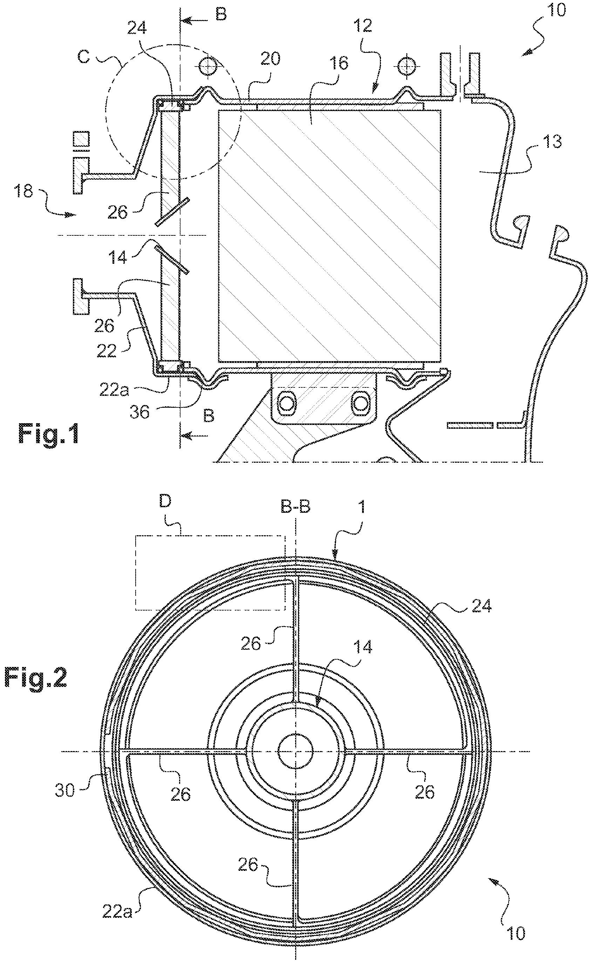

Dans la présente demande, on entend par direction « axiale », la direction de l'axe de la chambre tubulaire (ou de l'enceinte), c'est-à-dire la direction normale au plan de la figure 2. La direction radiale est définie par rapport à cette direction axiale. Les surfaces tubulaires présentent toutes un axe confondu avec l'axe de la chambre tubulaire.

La figure 1 représente partiellement un dispositif de post-traitement catalytique 10 présentant une enceinte 12 définissant une chambre tubulaire 13 à l'intérieur de laquelle est disposé un élément déflecteur 14. De manière usuelle, tous ces éléments sont en acier inoxydable.

L'enceinte 12 reçoit également un bloc catalytique 16, par exemple un monolithe contenant un catalyseur d'oxydation.

L'élément déflecteur 14 est généralement de forme tronconique, tel que représenté sur les figures, dont le plus petit diamètre est situé du côté d'une entrée 18 de l'enceinte 12.

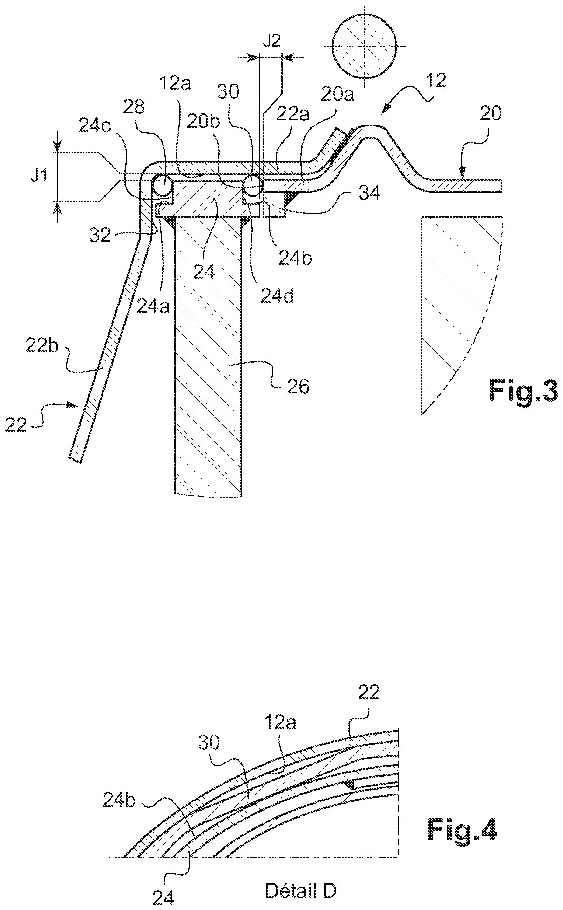

L'enceinte 12 comprend une enveloppe tubulaire 20 logeant le bloc catalytique 16 et un cône d'entrée 22 dont une extrémité 22a recouvre partiellement une extrémité 20a de l'enveloppe 20, tel que visible sur la figure 3.

Selon l'invention, un moyen de support de forme sensiblement annulaire 24 supporte l'élément déflecteur 14 sensiblement au centre de la chambre 13 par plusieurs bras 26 s'étendant radialement entre l'élément déflecteur 14 et ledit moyen de support 24.

Dans l'exemple, le moyen de support est une couronne et les bras 26 sont au nombre de 4. Cette couronne peut être formée d'une pièce ou de plusieurs éléments jointifs.

Il est possible de prévoir moins de bras, par exemple au moins deux, un meilleur maintien sera toutefois obtenu avec 3 ou 4 bras. Ces bras 26 sont avantageusement répartis régulièrement sur la périphérie de l'élément déflecteur 14. Ils sont soudés d'une part à l'élément déflecteur 14 et d'autre part à la couronne 24.

Il est possible de prévoir que ledit moyen de support comprend des éléments en forme de portion d'anneau s'étendant parallèlement à une paroi intérieure de l'enceinte tubulaire selon un arc dont l'angle est de manière préférentielle supérieur à 60°. Le nombre d'éléments peut varier selon le nombre de bras 26, chaque élément peut être fixé de manière préférentielle en son milieu à une extrémité d'un bras. Lesdits éléments sont adaptés pour être disposés selon un même anneau entourant le déflecteur, l'angle de chaque élément est tel que la somme des angles est inférieure à 360°.

Le moyen de support 24 s'étend parallèlement à la paroi intérieure de l'enceinte et présente un jeu prédéterminé J1 avec cette paroi selon la figure 3. Ce jeu peut être déterminé en fonction d'une dilatation maximale du moyen de support 24, de manière à absorber cette dilatation maximale. Pour un dispositif de post-traitement de véhicule automobile, le jeu J1 peut être de l'ordre du millimètre.

Dans l'exemple représenté et tel que visible sur la figure 3, le moyen de support 24 présente une section en forme de T retourné, chaque bras du T formant une surface latérale externe 24a, 24b, s'étendant axialement, le pied (partie verticale) du T définissant des surfaces latérales radiales 24c, 24d adjacentes aux surfaces externes axiales 24a, 24b, respectivement. Dans l'exemple représenté, ces surfaces latérales externes sont cylindriques, de même que l'enveloppe 20. L'invention n'est toutefois pas limitée à cette forme particulière, des formes elliptiques étant envisageables.

Pour assurer le blocage du moyen de support 24 par rapport à l'enceinte 12, deux éléments de maintien 28, 30 sont positionnés entre ledit moyen de support 24 et l'enceinte 12, de part et d'autre du moyen de support 24 axialement. Les surfaces externes 24a, 24b du moyen de support servent d'appui à ces éléments de maintien 28, 30 suivant une direction radiale, les surfaces latérales radiales 24c, 24d servant d'appui suivant une direction axiale. Lorsque le moyen de support 24 est monté à l'intérieur de l'enceinte, les surfaces externes 24a, 24b sont en regard de la surface tubulaire interne 12a de l'enceinte.

Chaque élément de maintien 28, 30 présente une forme générale annulaire ouverte ondulant radialement de manière à être en contact alternativement avec une surface externe 24a, 24b respectivement du moyen de support et la surface interne 12a de l'enceinte. La figure 2 montre notamment que ces éléments de maintien ne sont pas fermés, leurs extrémités étant distantes (voir partie gauche de la figure). Les ondulations radiales sont plus particulièrement visibles sur la figure 4. Elles sont conformées pour bloquer radialement le moyen de support 24 par rapport à l'enceinte 12, par exemple en réalisant des ondulations d'amplitude supérieure à la distance entre le moyen de support 24 et l'enceinte 12. Le fait que chaque élément de maintien 28, 30 ne soit pas fermé (de forme semblable à un anneau ouvert) permet à l'élément de maintien 28, 30 de se dilater librement dans l'espace disponible entre le moyen de support 24 et l'enceinte 12.

Un blocage axial du moyen de support 24 par rapport à l'enceinte 12 peut également être obtenu au moyen de deux butées annulaires 32, 34 disposées de part et d'autre dudit moyen de support 24, axialement, et solidaires de l'enceinte 12. Ces butées annulaires 32, 34 s'étendent radialement par rapport à l'axe de la chambre 13. Dans l'exemple représenté, l'une des butées annulaires 32 est formée par une surface interne radiale du cône d'entrée 22, située entre l'extrémité 22a et une partie conique 22b du cône d'entrée 22. L'autre butée annulaire est formée en partie par un bord d'extrémité 20b de l'enveloppe 20 et par une paroi annulaire 34 solidarisée à la surface interne de l'extrémité de l'enveloppe 20a, dans le prolongement du bord d'extrémité 20b, tel que visible sur la figure 3.

Le moyen de support 24 est conformé de manière à être situé à une distance prédéterminée J2 des butées annulaires 30, 32, axialement. Seule l'une des distances prédéterminées J2 est représentée sur la figure 3 pour plus de clarté. Cette distance prédéterminée J2, ou jeu, correspond par exemple à un jeu de dilatation de l'enveloppe 20, du cône d'entrée 22 et de la couronne 24. Pour un dispositif de post-traitement de véhicule automobile, le jeu J2 peut être de l'ordre de 0.5mm.

Le déflecteur 14 peut ainsi être mis en place facilement et rapidement à l'intérieur d'un dispositif de post traitement catalytique 10. A cet effet, il est mis en place à l'intérieur du cône d'entrée 22, ses éléments de maintien 28, 30 étant positionnés sur les surfaces externes 24a, 24b du moyen de support, l'un des éléments de maintien 28 étant en appui axialement contre la butée 32 de l'entrée de cône 22 et la surface latérale radiale 24c du moyen de maintien 24. Puis, l'entrée de cône 22 est enfilée sur l'extrémité 20a de l'enveloppe 20, jusqu'à ce que le bord d'extrémité 20b et la paroi annulaire adjacente 34 soient en appui contre le deuxième élément de maintien 30, tel que visible sur la figure 3, le cône d'entrée 22 étant ensuite solidarisé à l'enveloppe 20, par exemple au moyen d'un collier de serrage 36.

## Revendications

1. Dispositif de post-traitement (10) de gaz d'échappement de moteur à combustion interne de véhicule automobile comportant une enceinte (12) définissant une chambre tubulaire (13) à l'intérieur de laquelle est disposé un élément déflecteur (14) :
- au moins un moyen de support sensiblement en forme d'anneau s'étendant parallèlement à la paroi de l'enceinte avec un jeu prédéterminé (J1), et supportant l'élément déflecteur sensiblement au centre de la chambre tubulaire par au moins deux bras dont une extrémité est fixée au moyen de support et l'autre extrémité est fixée à l'élément déflecteur, **caractérisé en ce que**:
- deux éléments de maintien (28, 30) positionnés de part et d'autre dudit moyen de support (24) axialement, entre ledit moyen de support (24) et l'enceinte (12), chaque élément de maintien (28, 30) présentant une forme générale sensiblement annulaire ouverte ondulant radialement de manière à être en contact alternativement avec une surface interne (12a) de l'enceinte et une surface (24a, 24b) d'appui en regard dudit moyen de support (24), lesdites ondulations radiales étant conformées pour bloquer radialement ledit moyen de support par rapport à ladite enceinte.

2. Dispositif de post-traitement (10) selon la revendication 1, **caractérisé en ce que** le moyen de support comprend au moins deux éléments sensiblement en forme de portion d'anneau.

3. Dispositif selon la revendication 2, **caractérisé en ce qu'**un élément sensiblement en forme de portion d'anneau s'étend suivant un arc dont l'angle est supérieur à 60°.

4. Dispositif selon l'une des revendications 1 à 3, **caractérisé en ce que** le moyen de support comporte une couronne annulaire ou sensiblement annulaire.

5. Dispositif de post-traitement (10) selon l'une quelconque des revendications 1 à 4, **caractérisé en ce que** ladite surface interne (12a) de l'enceinte comporte deux butées annulaires ou sensiblement annulaires (32, 34, 20b) s'étendant radialement et disposées de part et d'autre, axialement, du moyen de support (24), à une distance prédéterminée (J2) dudit moyen de support, les deux éléments de maintien (28, 30) étant positionnés chacun entre ledit moyen de support (24) et une butée annulaire ou sensiblement annulaire (32, 34, 20b), en contact avec ladite butée et le moyen de support afin de bloquer axialement ledit moyen de support par rapport à ladite enceinte.

6. Dispositif de post-traitement (10) selon la revendication 5, **caractérisé en ce que** l'enceinte (12) comprend une enveloppe tubulaire (20) destinée à recevoir un bloc catalytique (16) et un cône d'entrée (22) dont une extrémité (22a) recouvre partiellement ladite enveloppe (20) et **en ce que** l'une des butées annulaires ou sensiblement annulaires (32) est formée par une surface interne radiale dudit cône d'entrée (22), l'autre butée annulaire ou sensiblement annulaire étant formée au moins en partie par un bord d'extrémité (20b) de ladite enveloppe tubulaire.

7. Dispositif de post-traitement (10) selon l'une quelconque des revendications 5 ou 6, **caractérisé en ce que** l'une des butées est une paroi annulaire ou sensiblement annulaire (34) solidarisée à une surface interne d'une extrémité (20a) de l'enveloppe, dans le prolongement d'un bord d'extrémité (20b).

8. Dispositif de post-traitement (10) selon l'une quelconque des revendications 1 à 7, **caractérisé en ce que** le moyen de support (24) présente une section transversale en forme de T retourné, chaque bras du T formant une surface (24a, 24b) d'appui d'un élément de maintien (28, 30), la barre verticale du T formant éventuellement des surfaces d'appui radiales (24c, 24d) pour les éléments de maintien (28, 30).

9. Dispositif de post-traitement (10) selon l'une quelconque des revendications 1 à 8, **caractérisé en ce que** ledit élément de maintien (28, 30) est un fil métallique.

10. Dispositif de post-traitement selon l'une des revendications 1 à 9, **caractérisé en ce que** l'élément déflecteur (14) central est de forme semblable à un tronc de cône dont le plus petit diamètre est situé du côté d'une entrée (18) de l'enceinte (12) dudit dispositif, de diamètre maximal prédéterminé et supporté par les au moins deux bras radiaux (26) du moyen de support (24) qui présente latéralement deux surfaces externes (24a, 24b) s'étendant axialement en suivant la forme dudit moyen de support et deux surfaces radiales latérales (24c, 24d) adjacentes, d'appui pour les éléments de maintien.

11. Dispositif de post-traitement (10) selon l'une quelconque des revendications 1 à 10, **caractérisé en ce que** les ondulations radiales de chaque élément de maintien (28, 30) de forme sensiblement annulaire ouverte ondulant radialement de manière à être en contact ponctuellement avec l'une des surfaces externes (24a, 24b) du moyen de support, présentent une amplitude prédéterminée.

12. Véhicule automobile comprenant un dispositif de post-traitement selon l'une des revendications 1 à 9.

## Patentansprüche

1. Vorrichtung zur Nachbehandlung (10) von Abgas eines Verbrennungsmotors eines Kraftfahrzeugs, die ein Gehäuse (12) aufweist, das eine rohrförmige Kammer (13) definiert, in deren Innerem ein Deflektorelement (14) angeordnet ist:
- wobei mindestens eine im Wesentlichen ringförmige Trägereinrichtung sich parallel zur Wand des Gehäuses mit einem vorbestimmten Spiel (J1) erstreckt und das Deflektorelement im Wesentlichen in der Mitte der rohrförmigen Kammer durch mindestens zwei Arme trägt, von denen ein Ende an der Trägereinrichtung und das andere Ende am Deflektorelement befestigt ist,
**dadurch gekennzeichnet, dass**:
- zwei Halteelemente (28, 30) zu beiden Seiten der Trägereinrichtung (24) axial zwischen der Trägereinrichtung (24) und dem Gehäuse (12) positioniert sind, wobei jedes Halteelement (28, 30) eine allgemein offene Ringform aufweist, die sich radial wellt, um abwechselnd mit einer Innenfläche (12a) des Gehäuses und einer gegenüberliegenden Auflagefläche (24a, 24b) der Trägereinrichtung (24) in Kontakt zu sein, wobei die radialen Wellenformen gestaltet sind, um die Trägereinrichtung radial bezüglich des Gehäuses zu blockieren.

2. Nachbehandlungsvorrichtung (10) nach Anspruch 1, **dadurch gekennzeichnet, dass** die Trägereinrichtung mindestens zwei Elemente im Wesentlichen in Form eines Ringabschnitts enthält.

3. Vorrichtung nach Anspruch 2, **dadurch gekennzeichnet, dass** ein Element im Wesentlichen in Form eines Ringabschnitts sich gemäß einem Bogen erstreckt, dessen Winkel größer als 60° ist.

4. Vorrichtung nach einem der Ansprüche 1 bis 3, **dadurch gekennzeichnet, dass** die Trägereinrichtung einen ringförmigen oder im Wesentlichen ringförmigen Kranz aufweist.

5. Nachbehandlungsvorrichtung (10) nach einem der Ansprüche 1 bis 4, **dadurch gekennzeichnet, dass** die Innenfläche (12a) des Gehäuses zwei ringförmige oder im Wesentlichen ringförmige Anschläge (32, 34, 20b) aufweist, die sich radial erstrecken und axial zu beiden Seiten der Trägereinrichtung (24) in einem vorbestimmten Abstand (J2) zur Trägereinrichtung angeordnet sind, wobei die zwei Halteelemente (28, 30) je zwischen der Trägereinrichtung (24) und einem ringförmigen oder im Wesentlichen ringförmigen Anschlag (32, 34, 20b) in Kontakt mit dem Anschlag und der Trägereinrichtung positioniert sind, um die Trägereinrichtung bezüglich des Gehäuse axial zu blockieren.

6. Nachbehandlungsvorrichtung (10) nach Anspruch 5, **dadurch gekennzeichnet, dass** das Gehäuse (12) eine rohrförmige Hülle (20) enthält, die dazu bestimmt ist, einen Katalysatorblock (16) und einen Eingangskegel (22) aufzunehmen, von dem ein Ende (22a) die Hülle (20) teilweise bedeckt, und dass einer der ringförmigen oder im Wesentlichen ringförmigen Anschläge (32) von einer radialen Innenfläche des Eingangskegels (22) geformt wird, während der andere ringförmige oder im Wesentlichen ringförmige Anschlag zumindest zum Teil von einem Endrand (20b) der rohrförmigen Hülle gebildet wird.

7. Nachbehandlungsvorrichtung (10) nach einem der Ansprüche 5 oder 6, **dadurch gekennzeichnet, dass** einer der Anschläge eine ringförmige oder im Wesentlichen ringförmige Wand (34) ist, die mit einer Innenfläche eines Endes (20a) der Hülle in der Verlängerung eines Endrands (20b) fest verbunden ist.

8. Nachbehandlungsvorrichtung (10) nach einem der Ansprüche 1 bis 7, **dadurch gekennzeichnet, dass** die Trägereinrichtung (24) einen Querschnitt in Form eines umgedrehten T aufweist, wobei jeder Schenkel des T eine Auflagefläche (24a, 24b) eines Halteelements (28, 30) formt, wobei der senkrechte Balken des T gegebenenfalls radiale Auflageflächen (24c, 24d) für die Halteelemente (28, 30) formt.

9. Nachbehandlungsvorrichtung (10) nach einem der Ansprüche 1 bis 8, **dadurch gekennzeichnet, dass** das Halteelement (28, 30) ein Metalldraht ist.

10. Nachbehandlungsvorrichtung nach einem der Ansprüche 1 bis 9, **dadurch gekennzeichnet, dass** das zentrale Deflektorelement (14) eine Form gleich einem Kegelstumpf hat, dessen kleinster Durchmesser sich auf der Seite eines Eingangs (18) des Gehäuses (12) der Vorrichtung befindet, mit einem vorbestimmten maximalen Durchmesser und getragen von den mindestens zwei radialen Armen (26) der Trägereinrichtung (24), die seitlich zwei Außenflächen (24a, 24b), die sich axial erstrecken, indem sie der Form der Trägereinrichtung folgen, und zwei benachbarte seitliche radiale Auflageflächen (24c, 24d) für die Halteelemente aufweist.

11. Nachbehandlungsvorrichtung (10) nach einem der Ansprüche 1 bis 10, **dadurch gekennzeichnet, dass** die radialen Wellenformen jedes Halteelements (28, 30) von im Wesentlichen offener Ringform, die sich radial wellen, um punktuell mit einer der Außenflächen (24a, 24b) der Trägereinrichtung in Kontakt zu sein, eine vorbestimmte Amplitude aufweisen.

12. Kraftfahrzeug, das eine Nachbehandlungsvorrichtung nach einem der Ansprüche 1 bis 9 enthält.

## Claims

1. Motor vehicle internal combustion engine exhaust-gas after-treatment device (10) comprising an enclosure (12) defining a tubular chamber (13) inside which there is arranged a deflector element (14) :
- at least one support means substantially in the form of a ring extending parallel to the wall of the enclosure with a predetermined clearance (J1) and supporting the deflector element substantially at the centre of the tubular chamber by at least two arms of which one end is fastened to the support means and the other end is fastened to the deflector element,
**characterized in that**:
- two retaining elements (28, 30) are positioned on either side of said support means (24) axially, between said support means (24) and the enclosure (12), each retaining element (28, 30) having a substantially annular open general shape undulating radially so as to be in contact alternately with an inner surface (12a) of the enclosure and an opposite bearing surface (24a, 24b) of said support means (24), said radial undulations being configured to block said support means radially with respect to said enclosure.

2. After-treatment device (10) according to Claim 1, **characterized in that** the support means comprises at least two elements substantially in the form of a ring portion.

3. Device according to Claim 2, **characterized in that** an element substantially in the form of a ring portion extends along an arc whose angle is greater than 60°.

4. Device according to one of Claims 1 to 3, **characterized in that** the support means comprises an annular or substantially annular ring.

5. After-treatment device (10) according to any one of Claims 1 to 4, **characterized in that** said inner surface (12a) of the enclosure comprises two annular or substantially annular stops (32, 34, 20b) extending radially and arranged on either side, axially, of the support means (24) at a predetermined distance (J2) from said support means, the two retaining elements (28, 30) being each positioned between said support means (24) and an annular or substantially annular stop (32, 34, 20b), in contact with said stop and the support means in order to block said support means axially with respect to said enclosure.

6. After-treatment device (10) according to Claim 5, **characterized in that** the enclosure (12) comprises a tubular envelope (20) intended to receive a catalytic block (16) and an inlet cone (22) of which one end (22a) partially covers said envelope (20), and **in that** one of the annular or substantially annular stops (32) is formed by a radial inner surface of said inlet cone (22), the other annular or substantially annular stop being formed at least in part by an end edge (20b) of said tubular envelope.

7. After-treatment device (10) according to either one of Claims 5 and 6, **characterized in that** one of the stops is an annular or substantially annular wall (34) secured to an inner surface of one end (20a) of the envelope, in the continuation of an end edge (20b).

8. After-treatment device (10) according to any one of Claims 1 to 7, **characterized in that** the support means (24) has a cross section in the form of an inverted T, each arm of the T forming a bearing surface (24a, 24b) for a retaining element (28, 30), the vertical bar of the T possibly forming radial bearing surfaces (24c, 24d) for the retaining elements (28, 30).

9. After-treatment device (10) according to any one of Claims 1 to 8, **characterized in that** said retaining element (28, 30) is a metal wire.

10. After-treatment device according to one of Claims 1 to 9, **characterized in that** the central deflector element (14) has a shape similar to a truncated cone whose smallest diameter is situated in the region of an inlet (18) of the enclosure (12) of said device, having a predetermined maximum diameter and supported by the at least two radial arms (26) of the support means (24) which has laterally two outer surfaces (24a, 24b) extending axially following the shape of said support means and two adjacent lateral radial surfaces (24c, 24d), as bearing for the retaining elements.

11. After-treatment device (10) according to any one of Claims 1 to 10, **characterized in that** the radial undulations of each retaining element (28, 30) of substantially annular open shape undulating radially so as to be in point contact with one of the outer surfaces (24a, 24b) of the support means have a predetermined amplitude.

12. Motor vehicle comprising an after-treatment device according to one of Claims 1 to 9.
